(19) Europäisches Patentamt
European Patent Office
Office européen des brevets

(11) **EP 1 398 888 A1**

(12) **EUROPEAN PATENT APPLICATION**
published in accordance with Art. 158(3) EPC

(43) Date of publication:
**17.03.2004 Bulletin 2004/12**

(51) Int Cl.⁷: **H04B 7/08**, H04B 1/707, H01Q 3/26

(21) Application number: **02736027.0**

(22) Date of filing: **07.06.2002**

(86) International application number:
**PCT/JP2002/005677**

(87) International publication number:
**WO 2002/103927 (27.12.2002 Gazette 2002/52)**

(84) Designated Contracting States:
**AT BE CH CY DE DK ES FI FR GB GR IE IT LI LU MC NL PT SE TR**

(30) Priority: **18.06.2001 JP 2001183749**

(71) Applicant: **NEC Corporation**
**Minato-ku, Tokyo 108-8001 (JP)**

(72) Inventor: **NAKAGAWA, Takashi**
**c/o Nec Corporation**
**Tokyo 108-8001 (JP)**

(74) Representative: **Glawe, Delfs, Moll & Partner**
**Patentanwälte**
**Postfach 26 01 62**
**80058 München (DE)**

(54) **ADAPTIVE ARRAY ANTENNA RECEPTION APPARATUS AND METHOD**

(57)    In an adaptive array antenna reception apparatus, radio reception sections (102a, 102b,..., 102n) convert RF signals from antenna elements (101a to 101n) into baseband signals (118a, 118b,..., 118n) and output them. In response to the converted baseband signals, a searcher section (103) detects the position (timing) of a path for each of the beams based on the antenna elements (101a to 101n). A Finger section (104) performs despreading at the timing detected by the searcher section (103), forms beams by using an adaptive algorithm, and maximum-ratio combines the beams. In this manner, when paths coincide with each other on the time axis, such paths can be discriminated in accordance with the positions (timings) of the paths. Therefore, there is no need to re-allocate the paths when a delay information difference is detected. This improves the follow-up characteristics of beams and communication quality.

FIG. 1

EP 1 398 888 A1

**Description**

Technical Field

The present invention relates to an adaptive array antenna reception apparatus and method and, more particularly, to an adaptive array antenna reception apparatus and method which provide an array antenna having a plurality of antenna elements for a radio base station in a mobile communication system using the DS-CDMA (Direct Sequence-Code Division Multiple Access) scheme, and equivalently form a desired beam pattern by multiplying received signals by arbitrary amplitude and phase weights and combining the products.

Background Art

In general, the DS-CDMA scheme is a scheme in which a plurality of communicators perform multiplex communication by using the same frequency band. The respective communicators are separated and identified by spreading codes. In mobile communication, the respective reception waves in multiplex wave propagation vary in propagation path length, and hence multiplex waves with different propagation delay times interfere with each other and are input to a plurality of receivers. Furthermore, since a mobile station varies in position with respect to a base station, path signals in the respective propagation paths undergo Rayleigh variations in an over-the-horizon situation. As a consequence, the resultant delay profile (the signal power distribution with respect to the delay times) also vary over time. In DS-CDMA communication, collecting a plurality of temporally separated multipath signals with different propagation delay times and performing in-phase combining (RAKE combining) of them can obtain a path diversity effect and improve the reception characteristics.

Alternatively, if the reception quality remains constant, the transmission power can be reduced by the diversity effect accompanying RAKE combining.

As base station antennas in a mobile communication system using the DS-CDMA, sector antennas are currently used. Each sector antenna is in charge of a corresponding one of a plurality of sectors divided from the 360° circumference (cell). Dividing a cell into sectors makes it possible to remove interference waves arriving from mobile stations outside a sector and to reduce interference to mobile stations outside the sector. However, waves from other users in the same sector become interference waves. Interference from other users is a main factor that causes a reduction in channel capacity and a deterioration in transmission quality. Therefore, as a technique of reducing this interference and improving the transmission quality, an adaptive array antenna system has been studied and developed.

An adaptive array antenna system equivalently forms an antenna directivity pattern (beam) by multiplying each antenna output by amplitude and phase weights. This system directs the beam in the arrival direction of a desired wave or directs a null in the arrival direction of an interference wave, thereby increasing the desired wave gain and suppressing interference within the area.

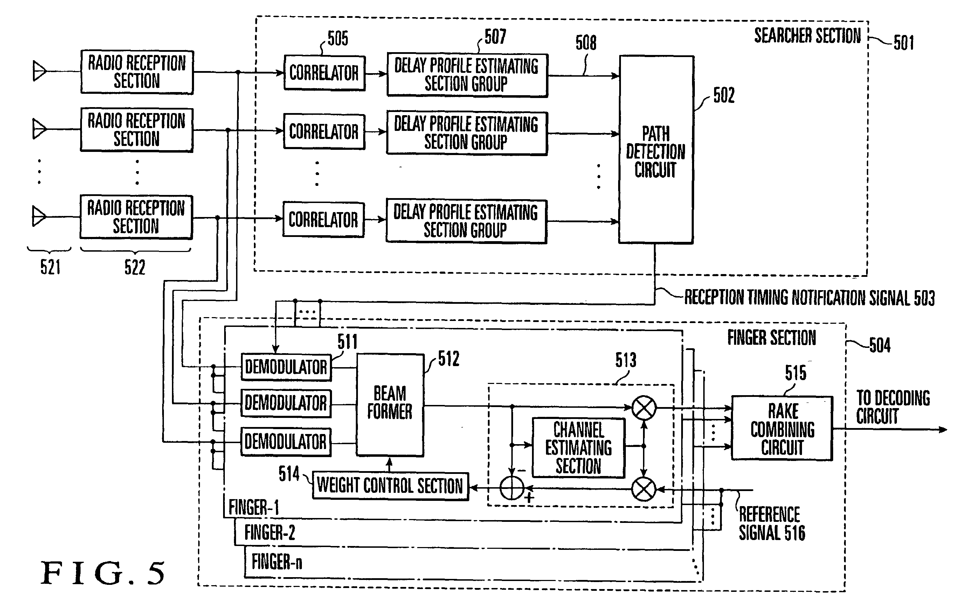

In the conventional adaptive array antenna apparatus in Fig. 5, RF (Radio Frequency) reception signals received by an antenna group 521 are frequency-converted into intermediate frequency signals by a radio reception section group 522 and amplified by an automatic gain amplifier (not shown). The amplified signals are quadrature-detected into I/Q channel baseband signals. These signals are then converted into digital signals by an A/D converter (not shown). The respective digital signals output from the radio reception section group 522 are sent to a searcher section 501 and Finger section 504. In the searcher section 501, first of all, a correlator group 505 calculates the sign correlations of desired wave signals contained in the reception signals received by the antenna group 521, and a delay profile estimating section group 507 generates a delay profile signal group 508 (a signal power distribution with respect to delay times) on the basis of the calculation results. The delay profile estimating section group 507 then outputs the signal group. A path detection circuit 502 searches for the reception timings of multipath signals in accordance with the delay profile signal group 508, and allocates the reception timings to the respective Fingers (Finger-1 to Finger-n) of the Finger section 504.

The Finger section 504 despreads the digital signals output from the radio reception section group 522 by using a reception timing notification signal 503 output from the path detection circuit 502. In each Finger of the Finger-1 to Finger-n of the Finger section 504, a demodulator group 511 (each Finger incorporates demodulators equal in number to all the antenna elements of the antenna group 521) performs despreading on the path allocated by the searcher section 501. The signals output from the demodulator group 511 after despreading are output to a beam former 512 to be multiplied by the amplitude and phase weights calculated by an adaptive algorithm in a weight control section 514, thus equivalently forming a beam. The output from the beam former 512 is subjected to channel estimation computation in a channel estimating section 513 on the basis of a reference signal 516, and is output to a RAKE combining circuit 515. The RAKE combining circuit 515 RAKE-combines the outputs from the channel estimating sections 513 of the respective Fingers, and sends out the resultant output.

An error signal required for the adaptive control algorithm in the weight control section 514 is generated by multiplying the reference signal 516 by a channel estimation value using the channel estimating section 513 and calculating the difference between the product and an output from the beam former 512. The weight control section 514 updates the amplitude and phase weights so as to minimize this error signal, thereby equivalently forming a beam pattern and making it follow up the allocated path.

Note that as an algorithm for determining amplitude and phase weights, an adaptive algorithm such as MMSE (Minimum Mean Squared Error) is used. Many of these types of algorithms are designed to make weights to be calculated gradually converge to optimal values.

As described above, in the conventional adaptive array antenna reception apparatus, the searcher section 501 can obtain only the power levels of paths and delay time information. There is therefore no choice than to allocate paths to the respective Fingers of the Finger section 504 on the basis of these two pieces of information.

As an example of such a path allocation method, "CDMA Multipath Search Method and CDMA Signal Reception Apparatus" disclosed in Japanese Patent Laid-Open No. 9-181704 is known. The following technique is described in this reference.

With regard to paths on which pieces of delay information coincide with each other, for example, there are available a method of re-allocating the paths to the Fingers on the basis of power level information, and a method of allocating a plurality of paths detected at predetermined intervals to the Finger section 504 in delay time order. With these methods, however, in an environment where the power levels of paths and delay information change every moment, calculation for adaptive processing needs to be redone repeatedly from the initial state, and a beam diverges every time such operation is required, resulting in a deterioration in reception quality and a reduction in channel capacity.

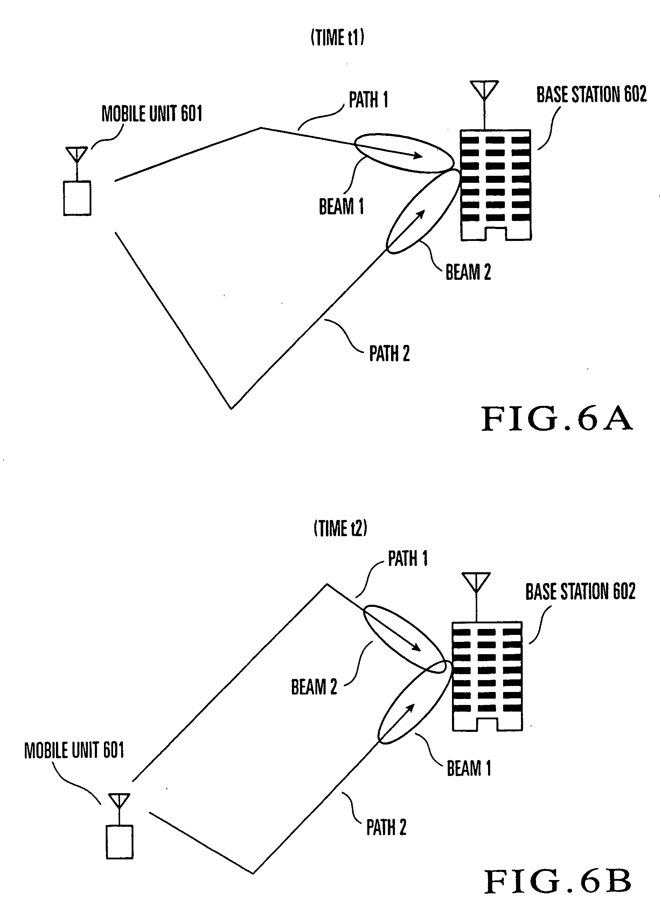

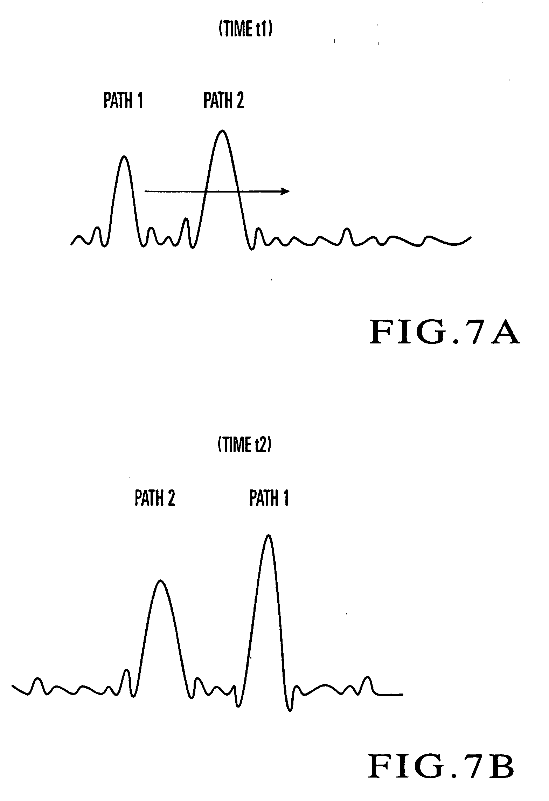

Referring to Fig. 6 (Figs. 6A and 6B) for explaining path delays and Fig. 7 (Figs. 7A and 7B) showing delay profiles in Fig. 6, assume that the signals transmitted from a mobile unit 601 have reached a base station 602 through two transmission paths, i.e., paths 1 and 2, at given time t1, as shown in Fig. 6A. Assume that since the transmission path length of path 1 is smaller than that of path 2 and the delay of path 1 is accordingly smaller than that of path 2, the searcher section 501 in the reception apparatus in the base station 601 obtains a delay profile like the one shown in Fig. 7A.

Subsequently, at given time t2, the mobile unit 601 moves, and the positional relationship shown in Fig. 6B is set. In this case, the transmission path length of path 1 becomes smaller than that of path 2, and a delay profile like the one shown in Fig. 7B is obtained in the base station 602.

In the conventional adaptive array antenna reception apparatus, in the case shown in Fig. 7A, paths 1 and 2 are respectively allocated to Finger-1 (i.e., beam 1) and Finger-2 (beam 2), and when the case shown in Fig. 7B is set, path allocation is switched such that path 2 is allocated to Finger-1 (beam 1); and path 1, to Finger-2 (beam 2). That is, when paths coincide with each other on the time axis, like paths 1 and 2, the conventional searcher section 501 cannot discriminate the two paths dependent on the movement of the mobile unit 601, and hence loses follow-up control on one of the paths. When a delay information difference is detected afterward, therefore, path allocation must be redone.

In adaptive processing in an adaptive array antenna system, this path allocation requires re-calculation for a beam that has converged or a beam in the process of convergence from the initial state. That is, this operation is a factor that greatly degrades the follow-up characteristics (convergence characteristics) of beams, posing a serious problem in terms of basic performance.

In the above conventional adaptive array antenna reception apparatus, as a propagation delay time changes due to a change in path length to a base station with the movement of a mobile unit, paths 1 and 2 which have been allocated to Finger-1 (i.e., beam 1) and Finger-2 (beam 2), respectively, are switched and re-allocated to Finger-2 (beam 2) and Finger-1 (beam 1), respectively, when the mobile unit moves. The searcher section cannot discriminate the two paths when they coincide with each other on the time axis, and hence loses follow-up control on one of the paths at this point of time. When, therefore, a delay information difference is detected afterward, the paths must be re-allocated again.

In addition, in adaptive processing in an adaptive array antenna system, this path re-allocation requires re-calculation for a beam that has converged or a beam in the process of convergence from the initial state. This greatly degrades the follow-up characteristics (convergence characteristics) of beams.

Disclosure of Invention

It is an object of the present invention to provide an adaptive array antenna reception apparatus and method which can greatly improve the follow-up characteristics (convergence characteristics) of adaptive array antenna system beams in a multipath environment exhibiting dynamic variations.

It is another object of the present invention to provide an adaptive array antenna reception apparatus and method which improve the communication quality and increase the channel capacity in an adaptive array antenna system.

According to the present invention, there is provided an adaptive array antenna reception apparatus using a DS-CDMA (Direct Sequence-Code Division Multiple Access) scheme, characterized by comprising

n (n is an integer not less than 1) antenna elements,

n radio reception sections which convert RF signals from the n antenna elements into n baseband signals,

a searcher section which receives the n baseband signals, form m (m is an integer not less than 1) beams, and detects a position timing of a path for each beam, and

a Finger section which receives the n baseband signals, despreads the signals at the position timings detected by the searcher section, forms beams by using an adaptive algorithm, and performs maximum-ratio combining.

Brief Description of Drawings

Fig. 1 is a block diagram showing an embodiment of the adaptive array antenna reception apparatus of the present invention;

Fig. 2 is a detailed block diagram of a searcher section beam former of a searcher section in Fig. 1;

Fig. 3 is a graph showing the beam directivity characteristics obtained when four beams are formed by using four antenna elements;

Fig. 4 is a block diagram showing the second embodiment of the adaptive array antenna reception apparatus of the present invention;

Fig. 5 is a block diagram showing a conventional adaptive array antenna reception apparatus;

Figs. 6A and 6B are views for explaining path delays; and

Figs. 7A and 7B are views showing delay profiles in Figs. 6A and 6B.

Best Mode for Carrying Out the Invention

Embodiments of the present invention will be described next with reference to the accompanying drawings.

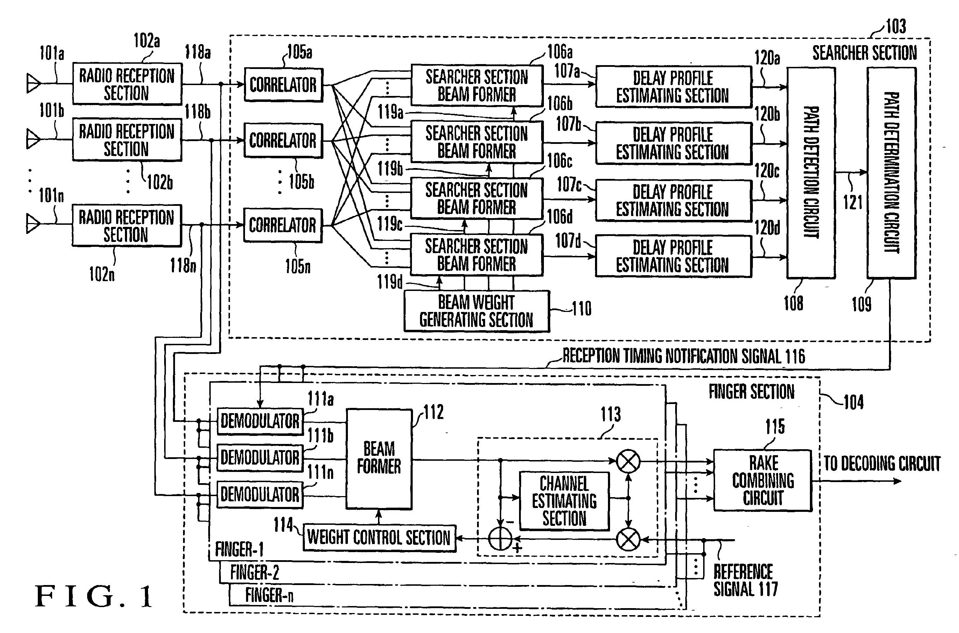

Fig. 1 is a block diagram showing an embodiment of the adaptive array antenna reception apparatus of the present invention.

The embodiment shown in Fig. 1 exemplifies the arrangement of a reception apparatus having a spatial type searcher for a case wherein four beams are formed. This arrangement is comprised of n antenna elements 101a, 101b, ..., 101n, n radio reception sections 102a, 102b,..., 102n which convert RF signals from the respective antenna elements 101a, 101b,..., 101n into baseband signals 118a, 118b,..., 118n, a searcher section 103 which detects the position (timing) of a path for each of the beams based on the antenna elements 101a to 101n, and a Finger section 104 which receives the baseband signals 118a, 118b,..., 118n, despreads the signals at the timing detected by the searcher section 103, forms beams by using an adaptive algorithm such as MMSE (Minimum Mean Squared Error), and maximum-ratio combines the beams.

The searcher section 103 includes correlators 105a, 105b,..., 105n corresponding to the number of antenna elements 101a, 101b,..., 101n, searcher section beam formers 106a to 106d which receive all outputs from the correlators 105a, 105b,..., 105n, weight the outputs with corresponding beam weight signals 119a to 119d, and output the resultant beams, delay profile estimating sections 107a to 107d corresponding to the number of beam outputs, a path detection circuit 108 which performs input processing of delay profile signals 120a to 120d output from the delay profile estimating sections 107a to 107d to output an effective path signal 121, a path determination circuit 109 which receives the effective path signal 121 and outputs a reception timing notification signal 116, and a beam weight generating section 110 which outputs beam weight signals 119a to 119d respectively to the searcher section beam formers 106a to 106d.

The Finger section 104 includes a plurality of Finger circuits Finger-1 to Finger-n and a RAKE combining circuit 115. Each Finger circuit incorporates demodulators 111a, 111b,..., 111n which demodulate the baseband signals 118a, 118b,..., 118n output from the radio reception sections 102a, 102b,..., 102n, a beam former 112 which receives outputs from the demodulators 111a to 111n, weights the outputs with amplitude and phase weights, and outputs the resultant beam, a channel estimating section 113 which performs channel estimation computation for the beam output from the beam former 112 on the basis of a reference signal 117, a weight control section 114 which controls the beam former 112 by weighting the amplitude and phase weights calculated by an adaptive algorithm such as MMSE, and the RAKE combining circuit 115 which in-phase combines outputs from the channel estimating sections 113 of the respective Finger circuits.

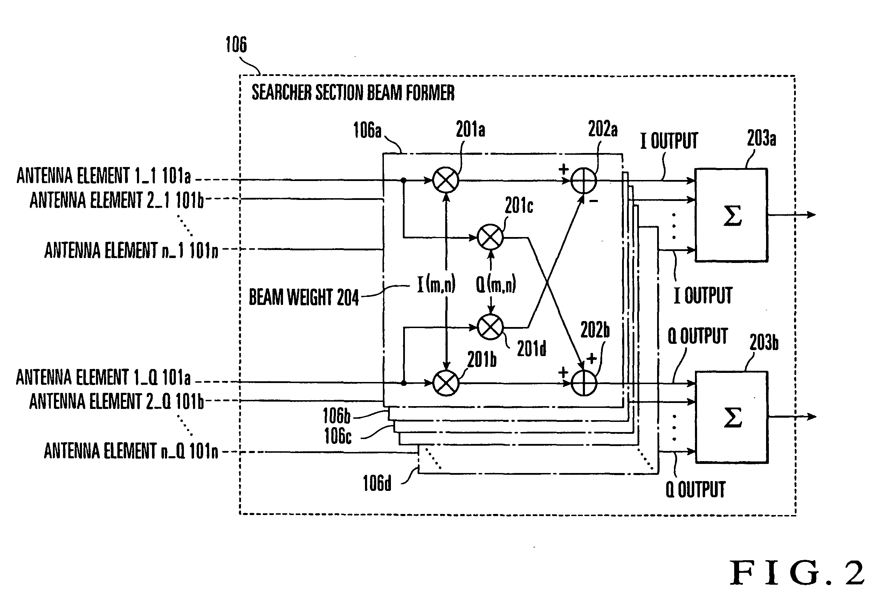

Fig. 2 is a detailed block diagram of the searcher section beam formers 106a to 106d of the searcher section 103 in Fig. 1.

Referring to Fig. 2, each of the searcher section beam formers 106a to 106d incorporates (4 x n) multipliers 201a, 201b, 201c, and 201d which perform complex product-sum operation corresponding to the number of antenna elements 101a, 101b,..., 101n, (2 x n) adders 202a and 202b, and two accumulators 203a and 203b which respectively add/combine n I outputs and n Q outputs.

The operation of this embodiment will be described in more detail next with reference to Figs. 1 and 2.

The RF signals received by the n antenna elements 101a to 101n are sent to the radio reception sections 102a to 102n, respectively. The RF signals are frequency-converted into intermediate frequency signals by the radio reception sections 102a to 102n and amplified by an automatic gain amplifier (not shown). The amplified signals are quadrature-detected into the I/Q channel baseband signals 118a to 118n. These signals are then converted into digital signals by an A/D converter (not shown). The baseband signals 118a to 118n output from the radio reception sections 102a to 102n are sent to the searcher section 103 and Finger section 104.

In the searcher section 103, first of all, the correlators 105a to 105n calculate the sign correlations of desired wave signals contained in the reception signals on an antenna element basis. All the n outputs from the correlators 105a to 105n are sent to the searcher section beam formers 106a to 106d, respectively. In the searcher section beam formers 106a to 106d, the respective outputs are weighted with the beam weight signals 119a to 119d output from the beam weight generating section 110.

Referring to Fig. 2, each of the searcher section beam formers 106a to 106d multiplies the sign correlation values of I/Q channel desired wave signals respectively input from the antenna elements 101a to 101n by a corresponding beam weight 204 by using the multipliers 201a to 201d and the adders 202a and 202b, and outputs the results obtained for the respective antenna elements to the accumulators 203a and 203b, thereby adding/combining the results. W(m, n) representing the beam weight 204 can be calculated by

$$W(m, n) = \exp\{j \times 2\pi(m-1)(n-1)/s + j\pi(n-1)/t\} \tag{1}$$

where m is a beam number (the number of a searcher section beam former), n is an antenna element number, s is the number of beams, and t is the number of antenna elements.

When, for example, four beams are to be formed by using four antenna elements, equation (1) is rewritten into

$$W(m, n) = \exp\{j \times 2\pi(m-1)(n-1)/4 + j\pi(n-1)/4\} \tag{2}$$

Therefore, a beam weight by which an input signal from the first antenna element is to be multiplied by the first searcher section beam former can be obtained by allocating 1 to m and n of equation (2).

The beam weight generating section 110 calculates beam weights according to equation (1) and sends the calculated weights as the beam weight signals 119a to 119d to the corresponding searcher section beam formers 106a to 106d. Outputs from the correlators 105a to 105n, which represent the correlation values of the respective antenna elements, are combined after they are multiplied by the beam weight signals 119a to 119d corresponding to the searcher section beam formers 106a to 106d, and hence the phases between the elements are corrected.

Each of the searcher section beam formers 106a to 106d forms one beam. This beam output from each beam former becomes a reception correlation value output.

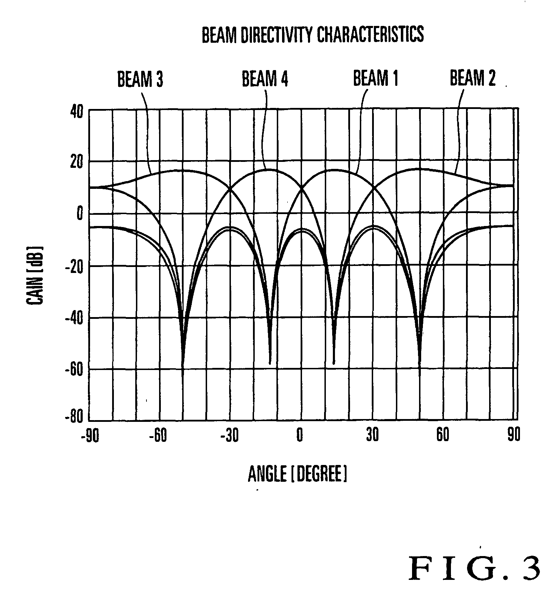

Fig. 3 is a graph showing beam directivity characteristics obtained when four beams are formed by using four antenna elements. The ordinate represents a gain Gain; and the abscissa, an angle Angle.

Fig. 3 shows the gains of beams 1, 2, 3, and 4, which are beam outputs from the searcher section beam formers 106a to 106d, with respect to the beam arrival angles. For example, a path which is incident at an angle of 15° can be received with beam 1 with a gain of a little less than 20 dB. In addition, the beam position of each beam is so designed as to coincide with the null points of the remaining beams, and hence the path which is incident at an angle of 15° cannot be received with the remaining beams. In other words, when the beams shown in Fig. 3 are formed and a path can be detected with only beam 1, it can be determined that the arrival angle of the path is 15°.

That is, beams like those shown in Fig. 3 are formed by multiplication of the beam weight factors obtained by equation (1), and a specific one of the beams with which a path is received is checked, or a specific reception level relationship between the beams with which the path is detected is checked. This makes it possible to determine the direction in which the path has been incident.

Conventionally, paths are classified according to only arrival time information. However, by forming beams and receiving paths in the above manner, the paths can be classified according to spatial information in addition to temporal information. Detecting a path by using such spatial information (beam number) is referred to as a spatial search.

The delay profile estimating sections 107a to 107d generate and output the delay profile signals 120a to 120d in accordance with beam outputs from the searcher section beam formers 106a to 106d. The path detection circuit 108 detects an effective path from the delay profile signals 120a to 120d for the respective beams, and sends delay information, power level information, and spatial information (beam number) as the effective path signal 121 to the path determination circuit 109.

The path determination circuit 109 matches the three pieces of information contained in the effective path signal 121 with the previously determined path information, and switches the paths so as to allocate a path regarded as identical to the previous path to the same Finger as the previous path.

In the case shown in Fig. 6, for example, according to the present invention, even if path 1 temporally coincides with path 2 as a mobile unit 601 moves, since the two paths can be recognized as different paths as long as path 1 differs in spatial information (beam number) from path 2, the allocation of paths to the Finger section need not be changed.

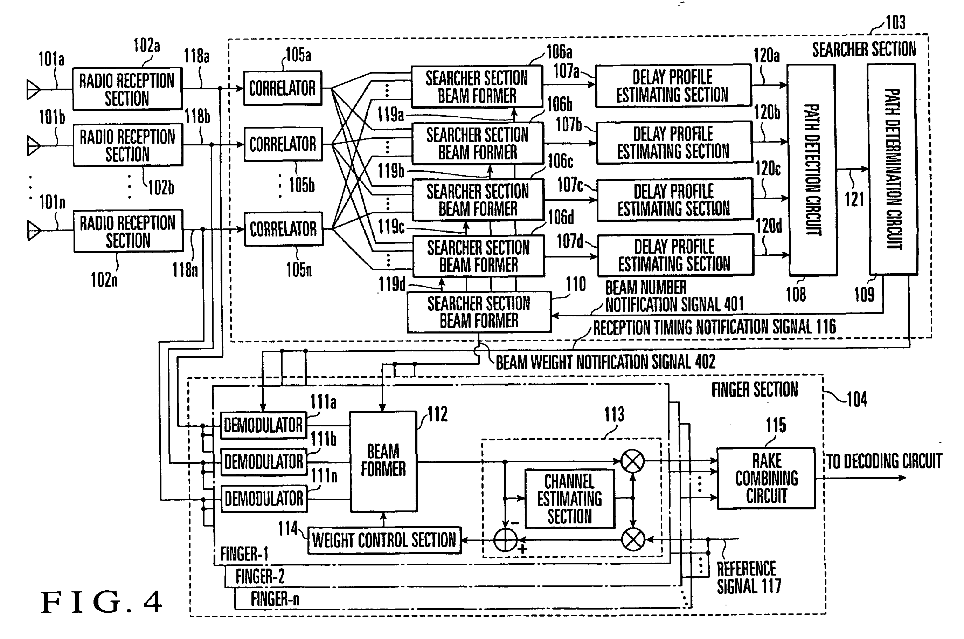

Fig. 4 is a block diagram showing the second embodiment of the adaptive array antenna reception apparatus of the present invention.

The same reference numerals or symbols as in Fig. 1 denote the same constituent elements in Fig. 4, and a description thereof will be omitted.

Referring to Fig. 4, a path determination circuit 109 outputs a beam number notification signal 401 to a beam weight generating section 110 as well as a reception timing notification signal 116. The beam weight generating section 110 outputs the weight of a beam with which a path has been detected, as a beam weight notification signal 402, to a beam former 112 of a Finger section 104.

A searcher section 103 therefore sends the timing information of the detected path as the reception timing notification signal 116 to demodulators 111a, 111b,..., 111n in the Finger section 104, and also outputs the beam weight of the beam with which the path has been detected, as an initial value, to the beam former 112 in the Finger section 104.

This allows the Finger section 104 to calculate a beam weight from a position near the arrival direction of a path instead of forming a beam in the absence of directivity. Therefore, a time required for convergence can be shortened as compared with the conventional reception apparatus.

As described above, the present invention is an adaptive array antenna system which provides an array antenna having a plurality of antenna elements for a radio base station in a mobile communication system using the DS-CDMA (Direct Sequence-Code Division Multiple Access) scheme, and equivalently forms a desired beam pattern by multiplying received signals by arbitrary amplitude and phase weights and combining the products, and is characterized by having a spatial search function.

The reception apparatus having the spatial search function according to the present invention is obtained by adding searcher section beam formers 106a to 106d, a path determination circuit 109, and the beam weight generating section 110 to the searcher section 501 of the conventional adaptive array antenna reception apparatus in Fig. 5, and needs to have the searcher section beam formers 106a to 106d mounted by a number equal to the number of beams. The correlation values of all antenna element input signals are output from correlators 105a to 105n to one searcher section beam former. The correlation values are then multiplied by beam weight signals 119a to 119n representing the fixed amplitude and phase weights generated by the beam weight generating section 110, and the products are combined to form a plurality of beams like those shown in Fig. 3 (Fig. 3 shows a case wherein the number of beams is set to four).

The path determination circuit 109 obtains multipath power level information, delay time information, and spatial information (beam number information) from a path detection circuit 108 on the preceding stage, and matches the currently detected paths with the previously detected paths to allocate paths to the Finger section 104.

If the reception apparatus having the spatial search function according to the present invention is used, since the searcher section 103 can obtain spatial information (beam number information) as well as conventional power level information, even paths which coincide with each other in terms of delay information can be identified, thus improving the follow-up characteristics (convergence characteristics) of beams in a multipath environment exhibiting dynamic variations. This in turn makes it possible to improve the reception quality and increase the channel capacity.

As has been described above, according to the adaptive array antenna reception apparatus and method of the present invention, the use of the reception apparatus having the spatial search function having spatial information (beam number information) allows the searcher section to obtain spatial information (beam number information) in addition to power level information and delay time information as in the prior art. This makes it possible to greatly improve the follow-up characteristics (convergence characteristics) of adaptive array antenna system beams in a multipath environment exhibiting dynamic variations. This also makes it possible to improve the communication quality and increase the channel capacity in the adaptive array antenna system.

**Claims**

1. An adaptive array antenna reception apparatus using a DS-CDMA (Direct Sequence-Code Division Multiple Access) scheme, **characterized by** comprising:

   n (n is an integer not less than 1) antenna elements;
   n radio reception sections which convert RF (Radio Frequency) signals from said n antenna elements into n baseband signals';
   a searcher section which receives the n baseband signals, form m (m is an integer not less than 1) beams, and detects a position timing of a path for each beam; and
   a Finger section which receives the n baseband signals, despreads the signals at the position timings detected by said searcher section, forms beams by using an adaptive algorithm, and performs maximum-ratio combining.

2. An adaptive array antenna reception apparatus according to claim 1, **characterized in that** said searcher section comprises
   n correlators corresponding in number to said n antenna elements,
   m searcher section beam formers which receive all outputs from said n correlators, weight the outputs with beam weight signals, and output correlation results for each beam,
   m delay profile estimating sections corresponding to an output count m of said searcher section beam formers,
   a path detection circuit which performs input processing of m delay profile signals output from said m delay profile estimating sections and outputs an effective path signal,
   a path determination circuit which receives the effective path signal and outputs a reception timing notification signal, and
   a beam weight generating section which outputs the m beam weight signals to said m searcher section beam formers.

3. An adaptive array antenna reception apparatus according to claim 1, **characterized in that**
   said Finger section includes a plurality of Finger circuits and a RAKE combining circuit which in-phase combines outputs from channel estimating sections of said respective Finger circuits,
   each of said plurality of Finger circuits comprises
   n demodulators which demodulate the n baseband signals output from said n radio reception sections,
   a beam former which receives the n demodulator outputs and outputs beams upon weighting with amplitude and phase weights,
   a channel estimating section which performs channel estimation computation for the beams output from said beam former on the basis of a reference signal, and
   a weight control section which controls said beam former by performing weighting with the amplitude and phase weights calculated by the adaptive algorithm.

4. An adaptive array antenna reception apparatus according to claim 2, **characterized in that** said searcher section beam former comprises (4 x n) multipliers and (2 x n) adders in order to perform complex product-sum operation corresponding in number to said n antenna elements, and also comprises two accumulators which add/combine n I outputs and n Q outputs, respectively.

5. An adaptive array antenna reception apparatus according to claim 2, **characterized in that** said path determination circuit outputs the reception timing notification signal and also outputs a beam number notification signal to said beam weight generating section.

6. An adaptive array antenna reception apparatus according to claim 5, **characterized in that** said beam weight generating section outputs a weight of a beam with which the corresponding path has been detected, as a beam weight notification signal, to said beam former of said Finger section.

7. An adaptive array antenna reception apparatus according to claim 2, **characterized in that** said searcher section sends detected path timing information as the reception timing notification signal to said n demodulators in said Finger section, and outputs a beam weight of a beam with which the corresponding path has been detected, as an initial value, to said beam former in said Finger section.

8. An adaptive array antenna reception apparatus according to claim 1, **characterized in that** n is set to n = 4.

9. An adaptive array antenna reception method using a DS-CDMA (Direct Sequence-Code Division Multiple Access) scheme, **characterized by** comprising:

the first step of converting radio signals received by n (n is an integer not less than 1) antenna elements into n baseband signals;
the second step of receiving the n baseband signals, forming m (m is an integer not less than 1) beams, and detecting a position timing of a path for each beam; and
the third step of receiving the n baseband signals, despreading the signals at the position timings detected in the second means, forming beams by using an adaptive algorithm, and performing maximum-ratio combining.

10. An adaptive array antenna reception method according to claim 9, **characterized in that** the second step includes
the step of generating n correlation outputs in correspondence with the n baseband signals,
the step of receiving all outputs from the n correlators, weighting the outputs with beam weight signals, and outputting m correlation results for each beam,
the step of estimating m delay profiles corresponding to the m outputs,
the step of performing input processing of the m delay profiles and outputting an effective path signal,
the step of receiving the effective path signal and outputting a reception timing notification signal, and
the step of generating the m beam weight signals.

11. An adaptive array antenna reception method according to claim 9, **characterized in that** the third step includes
the step of demodulating the n baseband signals and outputting n demodulated signals,
the step of outputting a beam upon weighting the n demodulated signals with amplitude and phase weights,
the step of performing channel estimation computation for the output beam on the basis of a reference signal,
the step of controlling weighting with the amplitude and phase weights calculated by the adaptive algorithm, and
the step of in-phase combining channel estimation computation results.

12. An adaptive array antenna reception method according to claim 10, **characterized in that** the step of outputting the reception timing notification signal includes the step of outputting a beam number notification signal used for the step of generating the beam weight signal.

SEARCHER SECTION 103

101a  RADIO RECEPTION SECTION  102a  118a
101b  RADIO RECEPTION SECTION  102b  118b
101n  RADIO RECEPTION SECTION  102n  118n

105a CORRELATOR
105b CORRELATOR
105n CORRELATOR

106a SEARCHER SECTION BEAM FORMER  107a
106b SEARCHER SECTION BEAM FORMER  107b
106c SEARCHER SECTION BEAM FORMER  107c
106d SEARCHER SECTION BEAM FORMER  107d

119a 119b 119c 119d

DELAY PROFILE ESTIMATING SECTION  120a
DELAY PROFILE ESTIMATING SECTION  120b
DELAY PROFILE ESTIMATING SECTION  120c
DELAY PROFILE ESTIMATING SECTION  120d

PATH DETECTION CIRCUIT  108
PATH DETERMINATION CIRCUIT  109
121

BEAM WEIGHT GENERATING SECTION  110

RECEPTION TIMING NOTIFICATION SIGNAL 116

FINGER SECTION 104

DEMODULATOR 111a
DEMODULATOR 111b
DEMODULATOR 111n

BEAM FORMER 112

113
CHANNEL ESTIMATING SECTION

RAKE COMBINING CIRCUIT 115

TO DECODING CIRCUIT

WEIGHT CONTROL SECTION 114

REFERENCE SIGNAL 117

FINGER-1
FINGER-2
FINGER-n

FIG. 1

EP 1 398 888 A1

9

EP 1 398 888 A1

106

SEARCHER SECTION BEAM FORMER

106a    201a    202a    I OUTPUT    203a

ANTENNA ELEMENT 1_1 101a

ANTENNA ELEMENT 2_1 101b

ANTENNA ELEMENT n_1 101n

BEAM WEIGHT 204    I(m,n)    Q(m,n)

ANTENNA ELEMENT 1_Q 101a

ANTENNA ELEMENT 2_Q 101b

106b
106c

ANTENNA ELEMENT n_Q 101n

106d

201c

201b    201d    202b    Q OUTPUT    203b

I OUTPUT

Q OUTPUT

Σ

Σ

FIG. 2

10

BEAM DIRECTIVITY CHARACTERISTICS

FIG. 3

F I G. 4

FIG. 5

(TIME t1)

FIG.6A

(TIME t2)

FIG.6B

(TIME t1)

PATH 1     PATH 2

FIG.7A

(TIME t2)

PATH 2     PATH 1

FIG.7B

### INTERNATIONAL SEARCH REPORT

| International application No. |
| --- |
| PCT/JP02/05677 |

| A. CLASSIFICATION OF SUBJECT MATTER |
| --- |
| Int.Cl$^7$ H04B7/08, H04B1/707, H01Q3/26 |
| According to International Patent Classification (IPC) or to both national classification and IPC |

| B. FIELDS SEARCHED |
| --- |
| Minimum documentation searched (classification system followed by classification symbols)<br>Int.Cl$^7$ H04B7/02-7/12, H04B1/69-1/713, H01Q3/26 |

| Documentation searched other than minimum documentation to the extent that such documents are included in the fields searched |
| --- |

| | | | |
| --- | --- | --- | --- |
| Jitsuyo Shinan Koho | 1922-1996 | Jitsuyo Shinan Toroku Koho | 1996-2002 |
| Kokai Jitsuyo Shinan Koho | 1971-2002 | Toroku Jitsuyo Shinan Koho | 1994-2002 |

| Electronic data base consulted during the international search (name of data base and, where practicable, search terms used) |
| --- |

### C. DOCUMENTS CONSIDERED TO BE RELEVANT

| Category* | Citation of document, with indication, where appropriate, of the relevant passages | Relevant to claim No. |
| --- | --- | --- |
| X | JP 11-266180 A (Fujitsu Ltd.),<br>28 September, 1999 (28.09.99),<br>Full text; Figs. 1 to 26<br>(Family: none) | 1-12 |
| A | JP 2000-349684 A (NEC Corp.),<br>15 December, 2000 (15.12.00),<br>Full text; Figs. 1 to 13<br>& EP 1058398 A2 | 1-12 |
| A | JP 2001-16148 A (Fujitsu Ltd.),<br>19 January, 2001 (19.01.01),<br>Full text; Figs. 1 to 7<br>(Family: none) | 1-12 |

| ☐ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>06 September, 2002 (06.09.02) | Date of mailing of the international search report<br>17 September, 2002 (17.09.02) |
| --- | --- |
| Name and mailing address of the ISA/<br>Japanese Patent Office | Authorized officer |
| Facsimile No. | Telephone No. |

Form PCT/ISA/210 (second sheet) (July 1998)